# EUROPEAN PATENT SPECIFICATION

(11) **EP 3 449 158 B1**
(45) Date of publication and mention of the grant of the patent: **08.01.2020**
(21) Application number: 17720071.4
(22) Date of filing: 25.04.2017
(51) Int. Cl.: F16H 61/4052, E02F 9/22, F16H 61/4183

(54) **HYDRAULIC SYSTEM**
HYDRAULIKSYSTEM
SYSTÈME HYDRAULIQUE

(30) Priority: 28.04.2016 WO PCT/SE2016/050374
(43) Date of publication of application: 06.03.2019
(73) Proprietor: Volvo Truck Corporation, 405 08 Göteborg (SE)
(72) Inventor: MÜLLER, Daniel, 54309 Newel (DE)
(74) Representative: Eisenführ Speiser
(86) International application number: PCT/EP2017/059758
(87) International publication number: WO 2017/186696

(56) References cited:
- DE-A1- 3 519 148
- US-B1- 6 508 328

## Description

### TECHNICAL FIELD

The present invention relates to a hydraulic system. Moreover, the present invention relates to a hydraulic assembly. Further, the present invention relates to a vehicle. Additionally, the present invention relates to a method for controlling a hydraulic fluid flow. Furthermore, the present invention relates to an electronic control unit.

### BACKGROUND OF THE INVENTION

A hydraulic assembly comprising a pump, a hydraulic motor and a hydraulic system connecting the pump and the hydraulic motor may be used in a plurality of applications. For instance, a hydraulic assembly may be used for propelling a vehicle, such as an excavator.

The hydraulic system connecting the pump and the hydraulic motor may include a main control valve that is controllable by an operator. When it is desired to stop the rotation of the hydraulic motor, the operator may control the main control valve such that the fluid communication between the pump and the hydraulic motor is closed. However, in such a situation, the hydraulic motor may nevertheless continue to rotate due to forces of inertia and this may result in cavitation of the hydraulic motor.

In order to avoid such a cavitation, an anticavitation valve may be mounted on the hydraulic motor. The anticavitation valve closes the backflow connection of the hydraulic motor to the main control valve meaning that hydraulic fluid discharged from the hydraulic motor will go to a supply side of the hydraulic motor and the hydraulic motor will not cavitate.

An example of a hydraulic system with an anticavitation valve is disclosed in US 8,333,069 B2. However, it would be desirable to improve the functionality of a hydraulic system comprising a main control valve and an anticavitation valve.

US6508328B relates to a hydrostatic transmission used as part of an wheel drive system of a motor grader. Each front wheel comprises a drive system having a pump, a hydraulic motor and a bypass valve. The bypass valve is arranged to protect the hydraulic motor from cavitation conditions.

DE3519148A1 relates to a valve arrangement between a main control valve and a hydraulic motor operating in an open circuit with two channels which can alternatively be supplied by the pump or connected to the return flow. Further, there is a pair of feed valve systems, each one of the valve systems having a pilot control valve and a spring-loaded feed valve.

### SUMMARY OF THE INVENTION

An object of the present invention is to provide a hydraulic system which implies an improved operability as compared to prior art system.

The above object is achieved by a hydraulic system according to claim 1.

As such, the present invention relates to a hydraulic system for circulating hydraulic fluid via a pump and a hydraulic motor. The hydraulic system being arranged for propelling a vehicle and comprises a main control valve adapted to be located between the pump and the hydraulic motor as seen in a direction of flow from the pump to the hydraulic motor. The hydraulic system further comprises an anticavitation valve adapted to be located between the main control valve and the hydraulic motor as seen in a direction of flow from the pump to the hydraulic motor. The anticavitation valve is arranged such that when the main control valve assumes a condition preventing fluid communication between the pump and the hydraulic motor, hydraulic fluid may flow from a first side to a second side of the hydraulic motor via the anticavitation valve.

The anticavitation valve comprises a variable valve assembly comprising an electronically controlled pressure relief valve for variably controlling the hydraulic fluid flow from the first side to the second side of the hydraulic motor. A variable pressure relief valve can be used for controlling the pressure of the hydraulic fluid that is fed to the hydraulic motor.

The variable valve assembly of the anticavitation valve implies that the fluid flow from the first side to the second side of the hydraulic motor may be controlled even when the main control valve prevents fluid communication between the pump and the hydraulic motor. As such, rather than providing a fixed flow resistance, the anticavitation valve according to the above implies a versatile control of the hydraulic motor even when the main control valve is closed.

Optionally, the hydraulic system further comprises a control unit adapted to control the variable valve assembly.

Optionally, the control unit is adapted to control the variable valve assembly by at least setting the relief pressure of the variable pressure relief valve.

Optionally, the control unit is adapted to receive a signal indicative of a vehicle propulsion mode for said vehicle, said control unit being adapted to set said relief pressure of said variable pressure relief valve based on said vehicle propulsion mode.

The wording "vehicle propulsion mode" should be understood to mean a current condition of the vehicle and in particular a current/present condition of the propulsion of the vehicle. This propulsion may relate to the braking action of the vehicle, a downhill driving condition of the vehicle, the current driver pedal/acceleration pedal position, hydraulic fluid temperature and/or hydraulic fluid pressure within the conduits, which may be caused by a specific current/present condition of the propulsion of the vehicle, vehicle speed, etc. By detecting and determining the vehicle propulsion mode, the electronically controlled pressure relief valve can be controlled which will avoid the risk of cavitation in the hydraulic motor. Thus, in these specific situations, there is an increased demand of receiving hydraulic fluid to the hydraulic motor for avoiding cavitation thereof.

Optionally, the vehicle propulsion mode is representative of a current drive condition of the vehicle.

Optionally, the current drive condition of the vehicle is one of the current vehicle speed, current vehicle acceleration level and a current vehicle deceleration level.

Optionally, the control unit is adapted to receive a hydraulic fluid temperature parameter indicative of the temperature of the hydraulic fluid in the hydraulic system and to control the variable valve assembly on the basis of the hydraulic fluid temperature parameter. A control in response to the hydraulic fluid temperature parameter implies that the hydraulic fluid that is recirculated via the hydraulic motor and the anticavitation valve may be prevented from being excessively heated. Hence, the vehicle propulsion mode is representative of a hydraulic fluid temperature parameter indicative of the temperature of the hydraulic fluid in said hydraulic system.

Moreover, a control in response to the hydraulic fluid temperature parameter may be used for adjusting the travel performance in dependence on the hydraulic fluid temperature. For instance, if the hydraulic fluid is relatively cold, the relief pressure may be lowered in order to obtain the same "braking" behaviour as with warm hydraulic fluid.

Optionally, the control unit is adapted to receive the vehicle propulsion mode from an operator input from an operator and to control the variable valve assembly on the basis of the operator input. For instance, the operator input is indicative of a desired deceleration rate of the hydraulic motor. As such, the operator may control the braking behaviour of the hydraulic motor by controlling the variable valve assembly. For instance, the operator may select between a "soft brake" and a "hard brake" of the hydraulic motor.

Purely by way of example, the operator may select a "hard brake" of the hydraulic motor on order to avoid excessive use of other braking arrangements of a vehicle that is powered by a hydraulic assembly. For instance, the "hard brake" may be used at low speeds of the vehicle. At high speeds, the "soft brake" may be used in order to avoid sudden jerks of the vehicle.

Optionally, the anticavitation valve comprises a flow control valve assembly for controlling the flow between the main control valve and the hydraulic motor.

Optionally, the flow control valve assembly comprises at least one proportional valve. Optionally, the at least one proportional valve is controlled by means of the control unit, the control unit controlling the at least one proportional valve based on the vehicle propulsion mode. Hereby, the control unit may control both the variable pressure relief valve as well as the at least one proportional valve based on the vehicle propulsion mode. Hereby, the backflow of hydraulic fluid to the main control valve can be prevented in combination with the direction of hydraulic fluid from the first side to the second side of the hydraulic motor. Hence, when preventing cavitation of the hydraulic motor, the control unit controls the pressure relief valve as well as the at least one proportional valve for directing hydraulic fluid from the first side to the second side of the hydraulic motor and preventing hydraulic fluid from being directed to the main control valve.

The present invention relates also to a hydraulic assembly comprising a pump, a hydraulic motor and a hydraulic system according to claim 1.

The present invention relates also to a vehicle, preferably a working machine, comprising a hydraulic system according to claim 1 and/or a hydraulic assembly according to claim 10

The present invention relates also to a method for controlling a hydraulic fluid flow via a hydraulic motor and an anticavitation valve of a hydraulic assembly. The hydraulic assembly comprises a pump, a hydraulic motor and a hydraulic system adapted to circulate hydraulic fluid via the pump and the hydraulic motor. The hydraulic system being arranged for propelling a vehicle and comprises a main control valve located between the pump and the hydraulic motor as seen in a direction of flow from the pump to the hydraulic motor. The hydraulic system further comprises the anticavitation valve located between the main control valve and the hydraulic motor as seen in a direction of flow from the pump to the hydraulic motor. The anticavitation valve is arranged such that when the main control valve assumes a condition so as to prevent fluid communication between the pump and the hydraulic motor, hydraulic fluid may flow from a first side to a second side of the hydraulic motor via the anticavitation valve.

The method further comprises controlling a variable valve assembly comprising an electrically controlled pressure relief valve of the anticavitation valve for variably controlling hydraulic fluid flow from the first side to the second side of the hydraulic motor.

Optionally, the method comprises setting the relief pressure of the variable pressure relief valve to thereby control hydraulic fluid flow from the first side to the second side of the hydraulic motor.

Optionally, the method comprises determining a hydraulic fluid temperature parameter indicative of the temperature of the hydraulic fluid in the hydraulic system and controlling the variable valve assembly on the basis of the hydraulic fluid temperature parameter. Optionally, the method comprises receiving operator input from an operator and controlling the variable valve assembly on the basis of the operator input.

Optionally, the operator input is indicative of a desired deceleration rate of the hydraulic motor.

The present invention relates also to an electronic control unit for a hydraulic assembly. The hydraulic assembly comprises a pump, a hydraulic motor and a hydraulic system adapted to circulate hydraulic fluid via the pump and the hydraulic motor.

The hydraulic system being arranged for propelling a vehicle and comprises a main control valve located between the pump and the hydraulic motor as seen in a direction of flow from the pump to the hydraulic motor. The hydraulic system further comprises the anticavitation valve located between the main control valve and the hydraulic motor as seen in a direction of flow from the pump to the hydraulic motor. The anticavitation valve is arranged such that when the main control valve assumes a condition preventing fluid communication between the pump and the hydraulic motor, hydraulic fluid may flow from a first side to a second side of the hydraulic motor via the anticavitation valve.

The electronic control unit is adapted to issue a signal for controlling an electrically controlled pressure relief valve of a variable valve assembly of the anticavitation valve for variably controlling the hydraulic fluid flow from the first side to the second side of the hydraulic motor.

### BRIEF DESCRIPTION OF THE DRAWINGS

With reference to the appended drawings, below follows a more detailed description of embodiments of the invention cited as examples.

In the drawings:
Fig. 1 illustrates an excavator;
Fig. 2 schematically illustrates an embodiment of a hydraulic propulsion system;
Fig. 3 schematically illustrates an embodiment of a hydraulic system;
Fig. 4 schematically illustrates an implementation of an anticavitation valve;
Fig. 5 schematically illustrates another implementation of an anticavitation valve;
Fig. 6 schematically illustrates a further implementation of an anticavitation valve;
Fig. 7 schematically illustrates an embodiment of a hydraulic system;
Fig. 8 schematically illustrates an embodiment of a hydraulic system, and
Fig. 9 schematically illustrates an implementation of an anticavitation valve.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

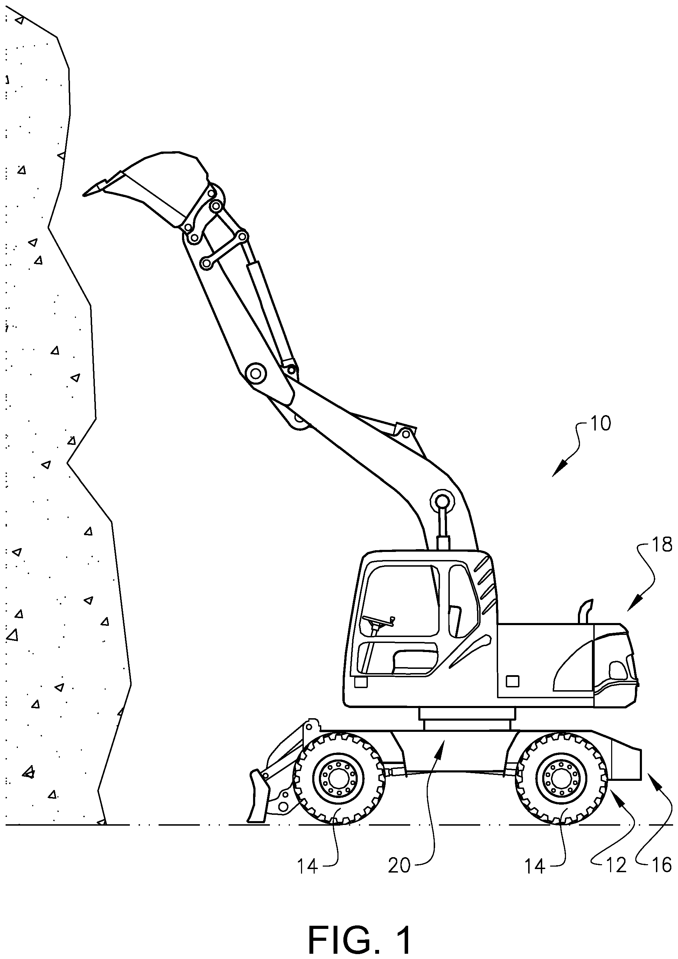

The invention will be described in the following for a vehicle in the form of a working machine 10. The Fig. 1 working machine 10 is an excavator. The Fig. 1 vehicle 10 comprises ground engaging elements 12 for propelling the vehicle 10. In the Fig. 1 embodiment, the ground engaging elements 12 comprises a set of wheels 14. However, it is also envisioned that the ground engaging elements 12 instead of, or in addition to, wheels may comprise other means for propelling the vehicle 10. As non-limiting example, implementations of the ground engaging elements 12 may comprise crawlers (not shown).

The Fig. 1 vehicle 10 comprises a lower frame 16. In the Fig. 1 embodiment, the lower frame is an undercarriage. The lower frame 16 may comprise the ground engaging elements 12. Moreover, the Fig. 1 vehicle 10 comprises an upper frame 18. In the Fig. 1 embodiment, the upper frame 18 is a superstructure. In embodiments of the vehicle 10, such as the excavator illustrated in Fig. 1, the upper frame 18 may be pivotable relative to the lower frame 16. To this end, the Fig. 1 vehicle 10 may comprise a swing system 20 allowing the upper frame 18 to pivot in relation to the lower frame 16.

The Fig. 1 vehicle 10 may be propelled by a hydraulic propulsion system.

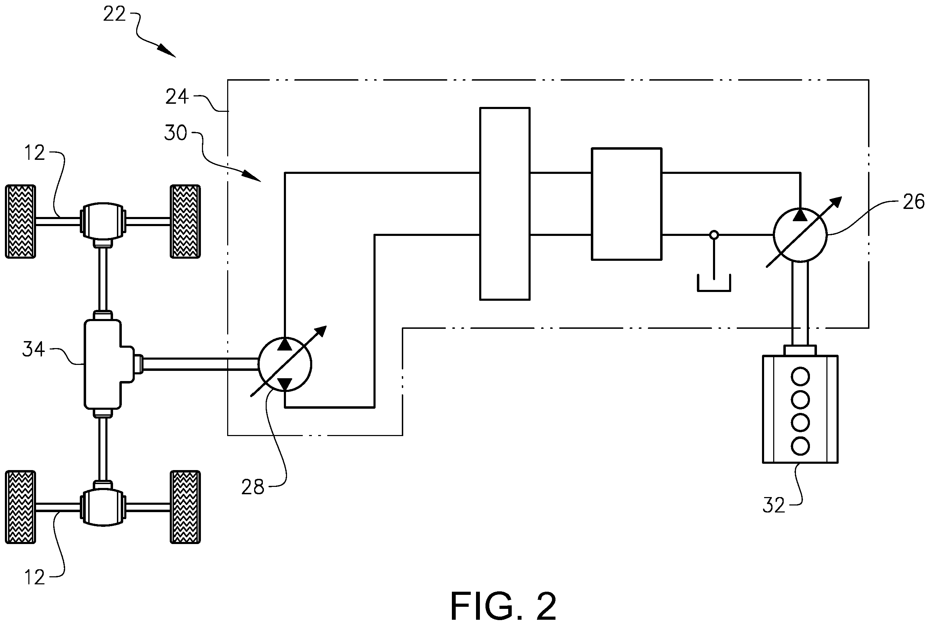

Fig. 2 illustrates an embodiment of a hydraulic propulsion system 22. The Fig. 2 hydraulic propulsion system 22 comprises a hydraulic assembly 24 which in turn comprises a pump 26, a hydraulic motor 28 and a hydraulic system 30 for circulating hydraulic fluid via the pump 26 and the hydraulic motor28.

The pump 26 is powered by a power generator 32, which in the Fig. 2 embodiment is exemplified as an internal combustion engine. However, it is also contemplated that other types of power generator may be used, such an electric motor (not shown).

The hydraulic motor 28 is adapted to power the ground engaging elements 12. In the Fig. 2 embodiment, the hydraulic motor 28 is connected to the ground engaging elements 12 via a gearbox 34. However, embodiments of the hydraulic propulsion system are contemplated in which the hydraulic motor 28 is connected directly to the ground engaging elements 12 (such an embodiment is not shown). For instance, embodiments of the hydraulic propulsion system are contemplated wherein the hydraulic motor 28 is connected directly to a wheel (such an embodiment is not shown).

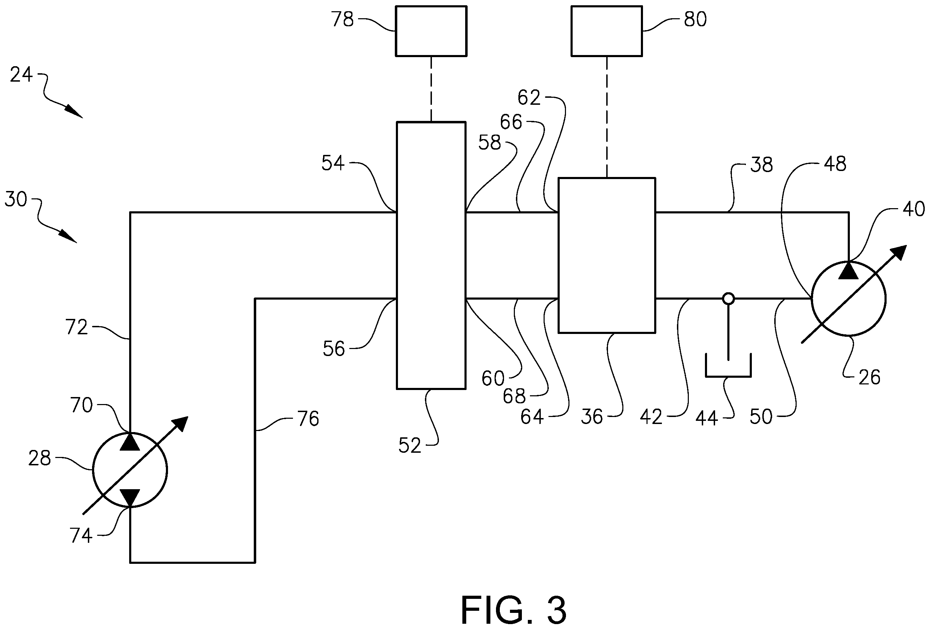

Fig. 3 illustrates the hydraulic assembly 24 of the Fig. 2 hydraulic propulsion system 22.

Purely by way of example, and as is indicated in Fig. 3, the pump 26 may be a variable displacement pump. Moreover, the Fig. 3 pump 26 is illustrated as a unidirectional pump although it is also envisioned embodiments of the hydraulic assembly 22 may comprise a bidirectional pump (not shown).

Moreover, though again purely by way of example, the hydraulic motor 28 may be a variable displacement hydraulic motor. Moreover, as is indicated in Fig. 3, the hydraulic motor 28 may be a bidirectional hydraulic motor. However, it is also envisioned that embodiments of the hydraulic assembly 24 may comprise a unidirectional hydraulic motor (not shown).

Furthermore, the hydraulic system 30 illustrated in Fig. 3 comprises a main control valve 36 adapted to be located between the pump 26 and the hydraulic motor 28 as seen in a direction of flow from the pump 26 to the hydraulic motor 28.

The hydraulic system 30 preferably comprises a feeding conduit 38 providing a fluid communication between a high pressure side 40 of the pump 26 and the main control valve 36. Moreover, the hydraulic system 30 preferably comprises a return conduit 42 providing a fluid communication between the main control valve 36 and a tank 44. Moreover, as is indicated in Fig. 3, the tank 44 may be connected to a low pressure side 48 of the pump 26, for instance by means of a supply conduit 50.

The hydraulic system 30 further comprises an anticavitation valve 52 adapted to be located between the main control valve 36 and the hydraulic motor 28 as seen in a direction of flow from the pump 26 to the hydraulic motor 28. In the Fig. 3 embodiment, the anticavitation valve 52 is located relatively close to the main control valve 36. However, it is also envisioned that in other embodiments of the hydraulic system 30, the anticavitation valve 52 may be located closer to the hydraulic motor 28 (not shown).

To this end, and as is indicated in Fig. 3, the anticavitation valve 52 may comprise a plurality of ports. In the Fig. 3 implementation, the anticavitation valve 52 comprises a first hydraulic motor connecting port 54 and a second hydraulic motor connecting port 56. Moreover, the Fig. 3 anticavitation valve 52 comprises a first main control valve connecting port 58 and a second main control valve connecting port 60.

The first main control valve connecting port 58 is in fluid communication with a first port 62 of the main control valve 36, for instance via a first connecting conduit 66. In a similar manner, the second main control valve connecting port 60 is in fluid communication with a second port 64 of the main control valve 36, for instance via a second connecting conduit 68.

Moreover, the first hydraulic motor connecting port 54 is in fluid communication with a first side 70 of the hydraulic motor 28, for instance via a first hydraulic motor connecting conduit 72. In a similar vein, the second hydraulic motor connecting port 56 is in fluid communication with a second side 74 of the hydraulic motor 28, for instance via a second hydraulic motor connecting conduit 76.

The anticavitation valve 52 is arranged such that when the main control valve 36 assumes a condition preventing fluid communication between the pump 26 and the hydraulic motor 28, hydraulic fluid may flow from a first side 70 to a second side 74 of the hydraulic motor 28 via the anticavitation valve 52.

Moreover, the anticavitation valve 52 comprises a variable valve assembly for variably controlling the hydraulic fluid flow from the first side 70 to the second side 74 of the hydraulic motor 28.

As is indicated in Fig. 3, the hydraulic system 30 may comprise a control unit 78 adapted to control the variable valve assembly of the anticavitation valve 52. Moreover, the hydraulic system 30 may comprises a main control valve control unit 80 adapted to control the main control valve 36. In Fig. 3, the control unit 78 and the main control valve control unit 80 are illustrated as separate control units. However, it is also envisioned that the variable valve assembly of the anticavitation valve 52 and the main control valve 36 may be controlled by one single control unit (not shown). The control unit 78 is arranged to receive a signal indicative of a vehicle propulsion mode of the vehicle, i.e. an indication of the present condition of the vehicle. By means of this signal, the control unit 78 sends a control signal for controlling the variable valve assembly 81, and in particular the electronically controlled pressure relief valve as is described below.

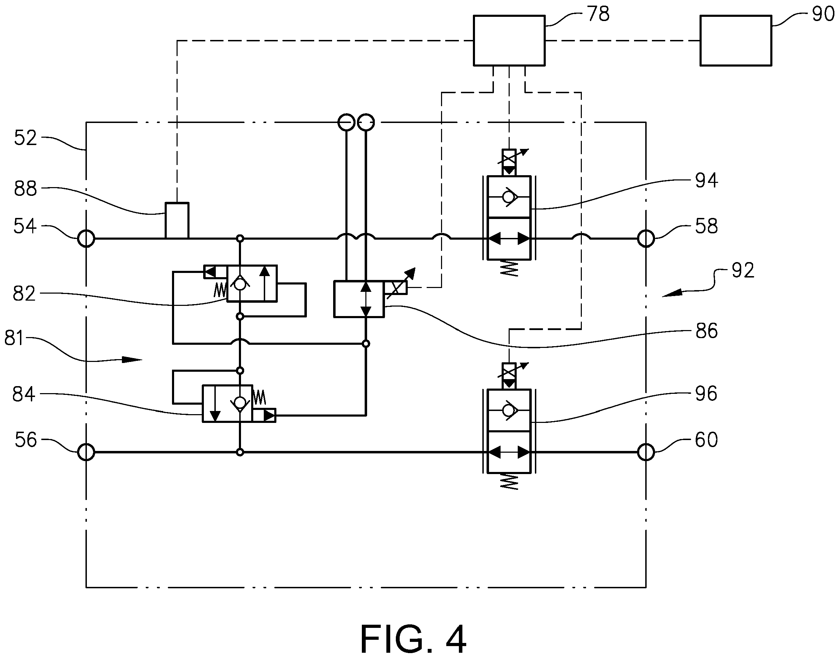

An embodiment of the anticavitation valve 52 is schematically illustrated in Fig. 4. As may be gleaned from Fig. 4, the variable valve assembly 81 may comprise a pressure relief valve. In fact, the Fig. 4 embodiment comprises a first pressure relief valve 82 and a second pressure relief valve 84.

In the Fig. 4 embodiment, the first pressure relief valve 82 is adapted to allow a hydraulic fluid flow in a direction from the second hydraulic motor connecting port 56 towards the first hydraulic motor connecting port 54 when the pressure acting on the first pressure relief valve 82 exceeds a first relief pressure. For pressures below the first relief pressure, the first pressure relief valve 82 assumes a condition only allowing a hydraulic fluid flow from the first hydraulic motor connecting port 54 to the second hydraulic motor connecting port 56.

In a similar vein, in the Fig. 4 embodiment, the second pressure relief valve 84 is adapted to allow a hydraulic fluid flow in a direction from the first hydraulic motor connecting port 54 towards the second hydraulic motor connecting port 56 when the pressure acting on the second pressure relief valve 84 exceeds a second relief pressure. For pressures below the second relief pressure, the second pressure relief valve 84 assumes a condition only allowing a hydraulic fluid flow from the second hydraulic motor connecting port 56 to the first hydraulic motor connecting port 54.

In embodiments of the anticavitation valve 52, the first and second relief pressures may be fixed. However, as is indicated in Fig. 4, the variable valve assembly 81 may comprises a variable pressure relief valve. The control unit 78 may be adapted to control the variable valve assembly 81 by at least setting the relief pressure of the variable pressure relief valve. The relief pressure of the variable pressure relief valve is preferably set based on the above described determined vehicle propulsion mode.

To this end, and as is indicated in Fig. 4, the first and second relief pressures may be set by a pilot pressure. To this end, the anticavitation valve 52 may comprise a pilot pressure control valve 86. In the Fig. 4 embodiment, one pilot pressure control valve 86 is in fluid communication with each one of the first and second pressure relief valves 82, 84. However, it is also contemplated that embodiments of the anticavitation valve 52 may comprise a two pilot pressure control valves (not shown), i.e. one for each pressure relief valve 82, 84. The pilot pressure control valve 86 may be controlled by the control unit 78.

The control unit 78 may be adapted to control the first and second relief pressures in a plurality of different ways.

Purely by way of example, the control unit 78 may be adapted to receive a hydraulic fluid temperature parameter indicative of the temperature of the hydraulic fluid in the hydraulic system and to control the variable valve assembly 81 on the basis of the hydraulic fluid temperature parameter. Such an embodiment is illustrated in Fig. 4 wherein the anticavitation valve 52 comprises a temperature sensor 88 adapted to determine the value of a parameter indicative of the temperature of the hydraulic fluid that flows between the first and second hydraulic motor connecting ports 54, 56.

The temperature sensor 88 is in communication with the control unit 78, for instance by means of wire based or wireless communication means. It should be noted that the Fig. 4 temperature sensor 88 and its position should be seen as an example only. It is contemplated that other implementations of the anticavitation valve 52 may comprise additional temperature sensors (not shown) and/or one or more sensors at other locations (not shown).

Purely by way of example, if the value of a parameter indicative of the temperature of the hydraulic fluid indicates that the hydraulic fluid temperature exceeds a certain threshold temperature, the control unit 78 may be adapted to lower the first and second relief pressures, for instance by issuing a signal to the pilot pressure control valve 86.

Instead of, or in addition to, controlling the anticavitation valve 52 on basis of the hydraulic fluid temperature, the control unit 78 may be adapted to receive operator input from an operator and to control the variable valve assembly 81 on the basis of the operator input.

To this end, reference is made to Fig. 4 illustrating that the control unit 78 may be in communication with a control device 90. The control device 90 may be controlled by an operator. To this end, the control device may for instance comprise at least one of the following components: a lever, a button or a set of buttons, a knob, a keyboard and a touch screen (not shown).

As a non-limiting example, the operator input may be indicative of a desired deceleration rate of the hydraulic motor 28 (see Fig. 3). As such, an operator may control the braking behaviour of the hydraulic motor. For instance, the operator may select between the following braking options: a "soft brake", resulting in low values of the first and/or second relief pressures, and a "hard brake", resulting in high values of the first and/or second relief pressures.

Moreover, the anticavitation valve 52 may comprise a flow control valve assembly 92 for controlling the flow between the main control valve 36 and the hydraulic motor 28 (see Fig. 3). Purely by way of example, the flow control valve assembly 92 comprises at least one proportional valve. In fact, the Fig. 4 implementation of the flow control valve assembly 92 comprises two proportional valves, via a first proportional valve 94 controlling the flow between the first hydraulic motor connecting port 54 and the first main control valve connecting port 58 as well as a second proportional valve 96 controlling the flow between the second hydraulic motor connecting port 56 and the second main control valve connecting port 60.

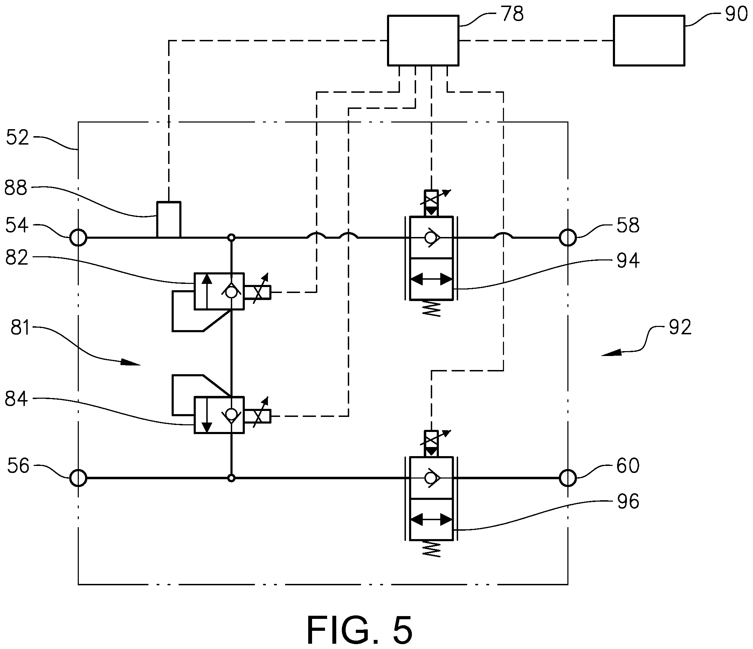

It should be noted that the first and second pressure relief valves 82, 84 need not necessarily be controlled by a pilot pressure. To this end, reference is made to Fig. 5 illustrating another implementation of the anticavitation valve 52. In the Fig. 5 implementation, the first and second pressure relief valves 82, 84 are directly electrically controlled. Thus, each of the first and second pressure relief valves 82, 84 are in communication with the control unit 78, for instance by means of a wire based or a wireless system. Moreover, as compared to the Fig. 4 implementation, the Fig. 5 first and second pressure relief valves 82, 84 are closed instead of opened in neutral position.

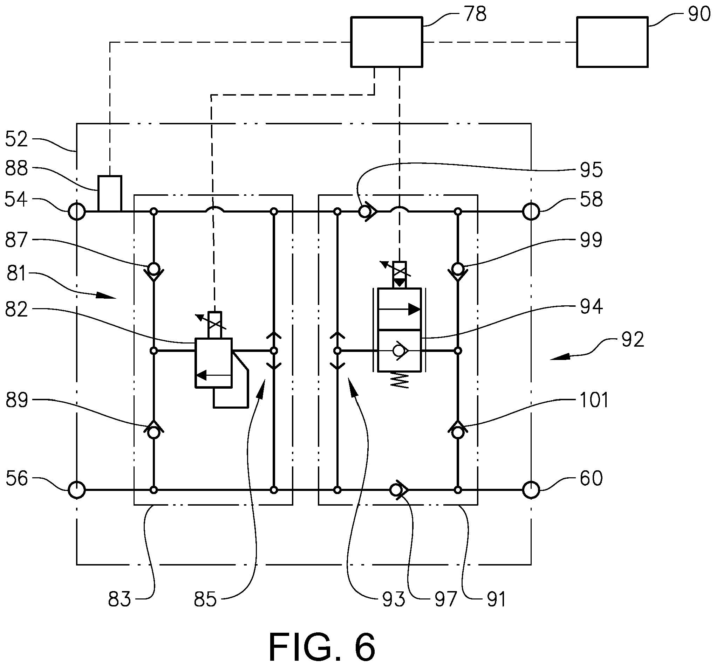

Although each one of the Fig. 4 and Fig. 5 implementations of the anticavitation valve 52 comprises a variable valve assembly 81 comprising two pressure relief valves 82, 84 and a flow control valve assembly 92 comprising two proportional valves 94, 96, it is also envisioned that implementations of the anticavitation valve 52 may comprise a variable valve assembly 81 with a single pressure relief valve and/or a flow control valve assembly 92 with a single proportional valve 94. The two proportional valves 94, 96 are controlled by means of the control unit 78. When the control unit 78 receives the signal indicative of the vehicle propulsion mode, the control unit 78 can control the proportional valves 94, 96 as well as the variable pressure relief valves 82, 84 based on the determined vehicle propulsion mode. Thus, if the vehicle propulsion mode is such that there is a risk of cavitation of the hydraulic motor, the control unit 78 can position the proportional valves 94, 96 as well as the variable pressure relief valves 82, 84 for preventing hydraulic fluid from being directed to the main control valve 36 and to control the hydraulic fluid to flow from the first side 70 to the second side 74 of the hydraulic motor 28.
To this end, reference is made to Fig. 6 illustrating an anticavitation valve 52 with a single pressure relief valve 82 and a single proportional valve 94.

The Fig. 6 anticavitation valve 52 comprises a first circuit portion 83 for hydraulic fluid transport between the first and second hydraulic motor connecting ports 54, 56 via the pressure relief valve 82.

To this end, the first circuit portion 83 comprises a shuttle valve 85 in fluid communication with each one of the first and second hydraulic motor connecting ports 54, 56 and the pressure relief valve 82. As such, the shuttle valve 85 provides a fluid communication between the pressure relief valve 82 and the hydraulic motor connecting ports 54, 56 that has the largest hydraulic pressure.

Moreover, the first circuit portion 83 comprises two non-return valves, a first non-return valve 87 located between the pressure relief valve 82 and the first hydraulic motor connecting port 54, allowing hydraulic fluid flow from the pressure relief valve 82 to the first hydraulic motor connecting port 54 but preventing hydraulic fluid flow from the first hydraulic motor connecting port 54 to the pressure relief valve 82, and a second non-return valve 89 located between the pressure relief valve 82 and the second hydraulic motor connecting port 56, allowing hydraulic fluid flow from the pressure relief valve 82 to the second hydraulic motor connecting port 56 but preventing hydraulic fluid flow from the second hydraulic motor connecting port 56 to the pressure relief valve 82.

By virtue of the first circuit portion 83, the hydraulic fluid at the first and second hydraulic motor connecting ports 54, 56 that has the largest pressure will enter the pressure relief valve 82 and thereafter exit the anticavitation valve via the other one of the hydraulic motor connecting ports 54, 56 since the non-return valves 87, 89 will prevent the hydraulic fluid to be returned to the hydraulic motor connecting port 54, 56 having the largest pressure.

In a similar vein, the Fig. 6 anticavitation valve 52 comprises a second circuit portion 91 for hydraulic fluid transport between the first main control valve connecting port 58 and the first hydraulic motor connecting ports 54 as well as between the second main control valve connecting port 60 and the second hydraulic motor connecting ports 56.

The second circuit portion 91 comprises a first non-return valve 95 allowing hydraulic fluid flow from the first main control valve connecting port 58 to the first hydraulic motor connecting port 54 but preventing hydraulic fluid flow from the first hydraulic motor connecting port 54 to the first main control valve connecting port 58.

Moreover, the second circuit portion 91 comprises a second non-return valve 97 allowing hydraulic fluid flow from the second main control valve connecting port 60 to the second hydraulic motor connecting port 56 but preventing hydraulic fluid flow from the second hydraulic motor connecting port 56 to the first main control valve connecting port 60.

Furthermore, the second circuit portion 91 comprises a shuttle valve 93 in fluid communication with each one of the first and second main control valve connecting ports 58, 60 and a proportional valve 94. As such, the shuttle valve 93 provides a fluid communication between the proportional valve 94 and the main control valve connecting port 58, 60 that has the largest hydraulic pressure.

Moreover, the second circuit portion 91 comprises a third non-return valve 99 located between the proportional valve 94 and the first main control valve connecting port 58, allowing hydraulic fluid flow from the proportional valve 94 to the first main control valve connecting port 58 but preventing hydraulic fluid flow from the first main control valve connecting port 58 to the proportional valve 94, and a fourth non-return valve 101 located between the proportional valve 94 and the second main control valve connecting port 60, allowing hydraulic fluid flow from the proportional valve 94 to the second main control valve connecting port 60 but preventing hydraulic fluid flow from the second main control valve connecting port 60 to the proportional valve 94.

During use, hydraulic fluid is fed in a direction from the main control valve 36 towards the hydraulic motor 28 via the Fig. 6 anticavitation valve 52 without passing the proportional valve 94. However, the hydraulic fluid that flows in the other direction through the anticavitation valve 52, viz from the hydraulic motor 28 towards the main control valve 36, will be guided through the proportional valve 94 such that the flow can be controlled.

Although the Fig. 6 valves 82, 94 are illustrated as electrically controlled valves, it is also envisioned that in variants of the Fig. 6 anticavitation valve 52, at least one of the pressure relief valve 82 and the proportional valve 94 may be controlled by a pilot pressure (not shown).

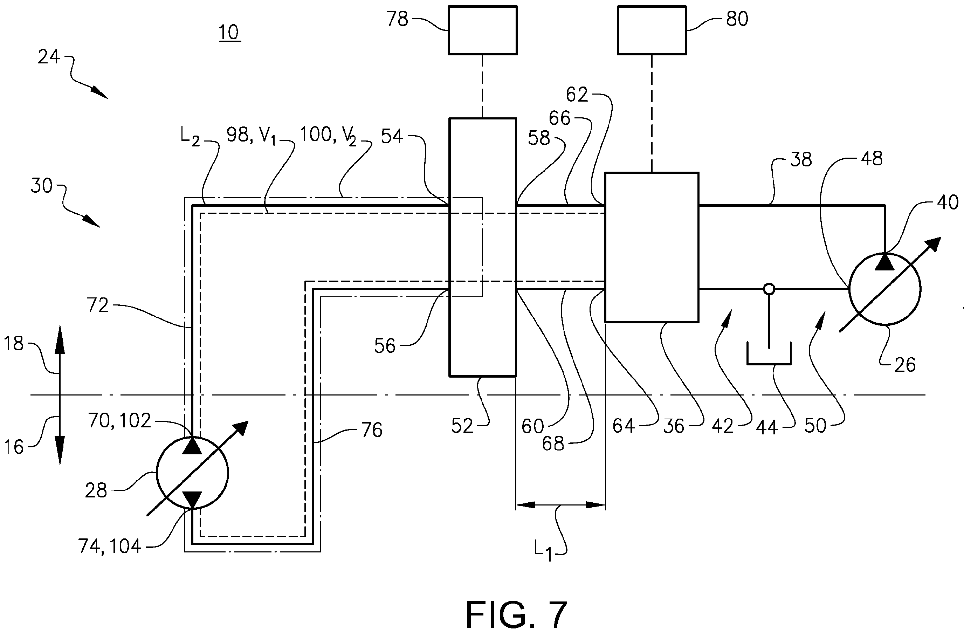

Fig. 7 illustrates an embodiment of a hydraulic assembly 24 which is similar the Fig. 3 embodiment. In particular, the Fig. 7 embodiment may comprise an anticavitation valve 52 in accordance with any one of the implementations of the anticavitation valve 52 which have been presented hereinabove with reference to any one of Fig. 3 to Fig. 6.

Furthermore, the hydraulic system 30 illustrated in Fig. 7 further comprises connection ports 102, 104 for connection to the hydraulic motor 28. In Fig. 7, the hydraulic system 30 comprises a first connection port 102 located at the opposite end of the first hydraulic motor connecting conduit 72 as compared to the first hydraulic motor connecting port 54. The first connection port 102 is adapted to be connected to the first side 70 of the hydraulic motor 28 and in the Fig. 7 embodiment, the first connection port 102 is connected to the first side 70 of the hydraulic motor 28.

Moreover, the hydraulic system 30 comprises a second connection port 104 located at the opposite end of the second hydraulic motor connecting conduit 76 as compared to the second hydraulic motor connecting port 56. The second connection port 104 is adapted to be connected to the second side 74 of the hydraulic motor 28 and in the Fig. 7 embodiment, the second connection port 104 is connected to the second side 74 of the hydraulic motor 28.

As for the Fig. 3 embodiment, the Fig. 7 hydraulic assembly 24 comprises a hydraulic system 30. In the Fig. 7 embodiment, the hydraulic system comprises a first fluid circuit 98, see the dotted line in Fig. 7, from the main control valve 36 to the first connection port 102 and from the second connection port 104 to the main control valve 36. The first fluid circuit 98 has a first circuit volume V₁.

The Fig. 7 hydraulic system 30 further comprises an anticavitation valve 52 adapted to be located between the main control valve 36 and the hydraulic motor 28 as seen in a direction of flow from the pump 26 to the hydraulic motor 28. The anticavitation valve 52 is arranged such that when the main control valve 36 assumes a condition preventing fluid communication between the pump 26 and the hydraulic motor 28, hydraulic fluid may flow from one of the first and second connection ports 102, 104 to the other connection port 102, 104 via the anticavitation valve 52 by means of a second fluid circuit 100. The second fluid circuit 100 has a second circuit volume V₂. The second fluid circuit 100 is indicated by a dashed and dotted line in Fig. 7.

The first circuit volume V₁ may be determined by arranging the anticavitation valve 52 in a condition so as to allow fluid communication between the main control valve 36 and the hydraulic motor 28. The first fluid circuit 98 is firstly emptied from any hydraulic fluid. The volume Vₕₘ of the hydraulic fluid that can be accommodated by the hydraulic motor 28 is determined. Secondly, a fluid such as hydraulic fluid or any other kind of reference fluid is fed through the first port 62 of the main control valve 36 until the fluid reaches the second port 64 of the main control valve 36. The first circuit volume V₁ corresponds to the volume V₀₁ of the fluid that has been fed through the first port 62 subtracted by the volume Vₕₘ of the hydraulic fluid that can be accommodated by the hydraulic motor 28.

The second circuit volume V₂ may be determined by arranging the anticavitation valve 52 in a condition so as to allow fluid communication between the first 70 side to the second side 74 of the hydraulic motor 28 via the anticavitation valve 52. The second fluid circuit 100 is firstly emptied from any hydraulic fluid. The volume Vₕₘ of the hydraulic fluid that can be accommodated by the hydraulic motor 28 is determined. Secondly, a fluid such as hydraulic fluid or any other kind of reference fluid is fed to the second fluid circuit 100 until the second fluid circuit 100 has been filled with fluid. The second circuit volume V₂ corresponds to the volume V₀₂ of the fluid that has been fed to the second fluid circuit 100 subtracted by the volume Vₕₘ of the hydraulic fluid that can be accommodated by the hydraulic motor 28.

Instead of the above procedures for determining the first circuit volume V₁ and the second circuit volume V₂, respectively, the circuit volumes V₁, V₂ may be determined using other procedures. Using the first fluid circuit 98 as an example, the first circuit volume V₁ may be determined by identifying the length and cross-sectional areas of every conduit that forms part of the first fluid circuit 98. Such a determination may for instance be made by measuring components of an existing hydraulic system 30 and/or by using a model, e.g. drawings and/or a computer model, of a hydraulic system 30. The first circuit volume V₁ may then be determined as the sum of the individual volume of each conduit forming part of the first fluid circuit 98. The second circuit volume V₂ may be determined in a similar manner by summing the individual volume of each conduit forming part of the second fluid circuit 100.

The second circuit volume V₂ is preferably at least 50% of the first circuit volume V₁ in order to ensuring a low risk for excessive heating of the hydraulic fluid circulating in the second fluid circuit 100. This is since a second circuit volume V₂ of least 50% of the first circuit volume V₁ implies that a relatively large volume of hydraulic fluid will be circulated via the hydraulic motor 28 and the anticavitation valve 52 when the main control valve 36 assumes a condition preventing fluid communication between the pump 26 and the hydraulic motor 28. In other non-limiting examples of the hydraulic system 30, the second circuit volume V₂ is at least 60%, preferably at least 70%, more preferred at least 80% of the first circuit volume V₁. It is also envisioned that the second circuit volume V₂ may be greater than the first circuit volume V₁.

Moreover, in the Fig. 7 embodiment, the anticavitation valve is located at a first distance L₁ from the main control valve as seen in an intended direction of flow from the main control valve to the anticavitation valve. As such, in the Fig. 7 embodiment, the first distance L₁ is the shortest length of the first connecting conduit 66 and the second connecting conduit 68. In fact, in the Fig. 7 embodiment, the first connecting conduit 66 and the second connecting conduit 68 are equally long.

Moreover, the shortest distance from the anticavitation valve 52 to one of the connection ports 102, 104 as seen in an intended direction of flow from the anticavitation valve 52 to the ports 102, 104 is a second distance L₂. As such, in the Fig. 7 embodiment, the second distance is the shortest one of the lengths of the first and second hydraulic motor connecting conduits 72, 76, respectively, which in the Fig. 7 embodiment is the length of the first hydraulic motor connecting conduit 72.

Each one of the first and second distance L₁, L₂ may be determined by measuring the lengths of portions of the hydraulic system 30, for instance using a measure tape. However, the distances L₁, L₂ may also be determined using a model of the hydraulic system 30, for instance drawings or a computer model, and determine the lengths by measuring portions of the model.

As indicated in Fig. 7, the first distance L₁ is smaller than the second distance, preferably the first distance L₁ is less than 50%, more preferred less than 30%, of the second distance L₂. Any one of the above relations between the first and second distances implies that the above-mentioned relation between the second circuit volume and the first circuit volume may be obtained in a straightforward manner.

Optionally, the first distance L₁ is equal to or less than 1 meter, preferable equal to or less than 0.5 meter, more preferred equal to or less than 0.2 meter. As such, the anticavitation valve 52 is preferably located relatively close to the main control valve 36.

Fig. 7 illustrates that the hydraulic system 30 is located in a vehicle 10 comprising an upper frame 18 and a lower frame 16. For instance, if the vehicle 10 is an excavator, such as the excavator illustrated in Fig. 1, the upper frame 18 may be the superstructure and the lower frame 16 may be the undercarriage. As is indicated in Fig. 7, the anticavitation valve 52 is connected to the upper frame 18 and the hydraulic motor 28 is connected to the lower frame 16.

Fig. 7 illustrates that the hydraulic system 30 is located in a vehicle 10 comprising an upper frame 18 and a lower frame 16. For instance, if the vehicle 10 is an excavator, such as the excavator illustrated in Fig. 1, the upper frame 18 may be the superstructure and the lower frame 16 may be the undercarriage. The upper frame 18 may be pivotable relative to the lower frame 16. As is indicated in Fig. 7, the anticavitation valve 52 is connected to the upper frame 18 and the hydraulic motor 28 is connected to the lower frame 16.

It should be noted that the above discussed location of the anticavitation valve 52 and the hydraulic motor 28, viz that the anticavitation valve 52 is connected to the upper frame 18 and the hydraulic motor 28 is connected to the lower frame 16, need not necessarily be linked to the above discussed features regarding the first circuit volume V₁, the second circuit volume V₂ and the relationship between the volumes V₁, V₂. As such, it is envisioned that embodiments of the hydraulic system 30, when located in a vehicle 10, may be operable in an appropriate manner mainly because of the fact that the anticavitation valve 52 is connected to the upper frame 18 and the hydraulic motor 28 is connected to the lower frame 16.

Instead of, or in addition to, arranging the anticavitation valve 52 close to the main control valve 36 and/or arranging the anticavitation valve 54 in an upper frame 18 of a vehicle 10 and arranging the hydraulic motor 28 in the lower frame 16 thereof, the preferred ratio between the second circuit volume V₂ and the first circuit volume V₁ may be obtained in a plurality of other ways.

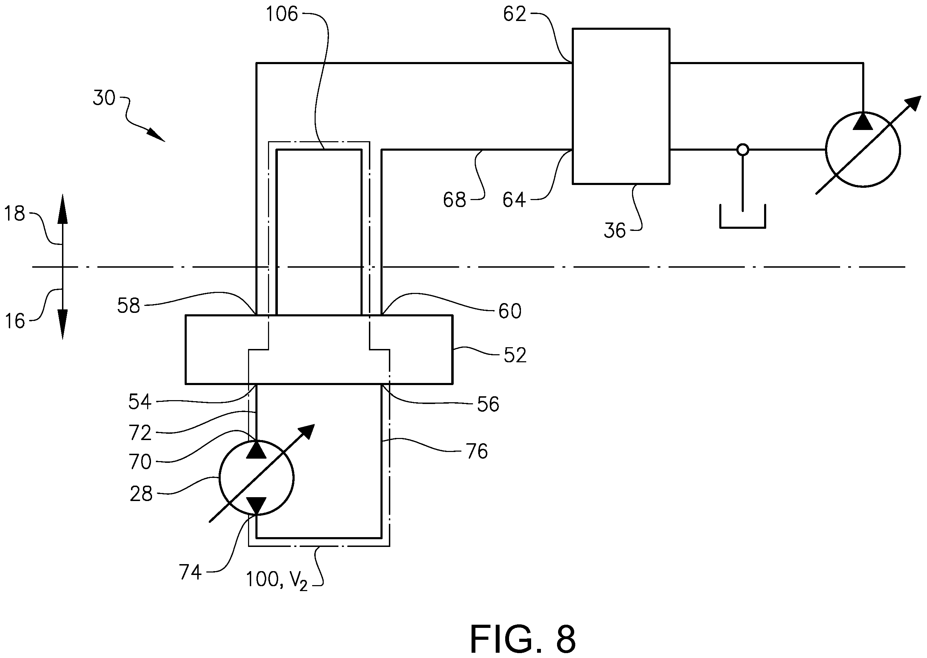

To this end, reference is made to Fig. 8. As compared to the Fig. 7 embodiment, the Fig. 8 embodiment comprises similar components. However, in addition to components of the Fig. 7 embodiment, the Fig. 8 embodiment comprises an anticavitation circulating circuit 106. The anticavitation circulating circuit 106 forms part of the second fluid circuit 100 but does not form part of the first fluid circuit 98.

Purely by way of example, and as is indicated in Fig. 8, the anticavitation circulating circuit 106 may be located between the first and second hydraulic motor connecting ports 54, 56. Moreover, the anticavitation circulating circuit 106 is connected to the anticavitation valve 54 in such a manner that hydraulic fluid flowing between the main control valve 36 and the hydraulic motor 28 does not flow through the anticavitation circulating circuit 106.

For instance, in the Fig. 8 implementation of the anticavitation valve 52, hydraulic fluid flowing between the first hydraulic motor connecting port 54 and the first main control valve connecting port 58 or between the second hydraulic motor connecting port 56 and the second main control valve connecting port 60 does not flow through the anticavitation circulating circuit 106.

Instead, the anticavitation circulating circuit 106 may be connected to the anticavitation valve 54 in such a manner that only hydraulic fluid flowing between the first and second hydraulic motor connecting ports 54, 56 flows through the anticavitation circulating circuit 106.
Purely by way of example, the volume of the anticavitation circulating circuit 106 may constitute at least 20%, preferably at least 30%, more preferred at least 40%, of the second circuit volume V₂. As may be realized from Fig. 8, by virtue of the anticavitation circulating circuit 106, a large circulation volume may be obtained even on embodiments in which the anticavitation valve 52 is located relatively close to the hydraulic motor 28.

In fact, in embodiments of the hydraulic system 30 which comprises an anticavitation circulating circuit 106, the anticavitation valve 52 may even be located in the lower frame 16 of a vehicle 10. However, it is also envisioned that the Fig. 8 anticavitation circulating circuit 106 may be used in embodiments in which the anticavitation valve 52 is located in the upper frame 18 of a vehicle 10.

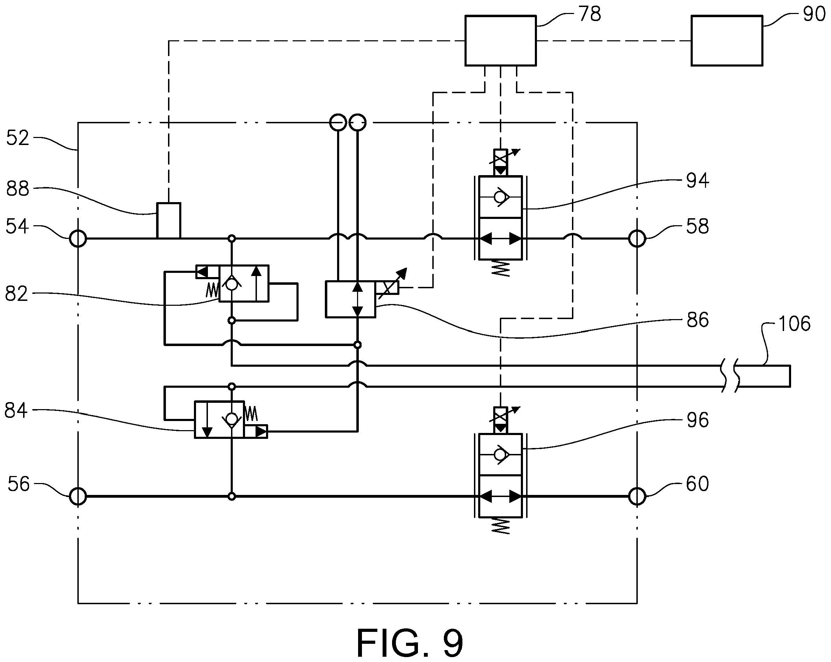

Fig. 9 illustrates the Fig. 8 anticavitation valve 52 and the anticavitation circulating circuit 106. As may be gleaned from Fig. 9, the anticavitation circulating circuit 106 may be connected to the anticavitation valve 52 at a position between the first pressure relief valve 82 and a second pressure relief valve 84.

The Fig. 9 anticavitation valve 52 is based on the Fig. 4 implementation of the anticavitation valve 52. However, it is also envisioned that the Fig. 5 anticavitation valve 52 or the Fig. 6 anticavitation valve 52 may be modified so as to be connected to the anticavitation circulating circuit 106. For instance, the anticavitation circulating circuit 106 may be connected to the Fig. 5 anticavitation valve 52 at a position between the first pressure relief valve 82 and a second pressure relief valve 84. Moreover, as another example, the anticavitation circulating circuit 106 may be connected to the Fig. 6 anticavitation valve 52 at a position between the pressure relief valve 82 and the first and second non-return valves 87, 89.

## Claims

1. A hydraulic system (30) for circulating hydraulic fluid via a pump (26) and a hydraulic motor (28), said hydraulic system being arranged for propelling a vehicle, wherein said hydraulic system (30) comprises a main control valve (36) located between said pump (26) and said hydraulic motor (28) as seen in a direction of flow from said pump (26) to said hydraulic motor (28), and an anticavitation valve (52) located between said main control valve (36) and said hydraulic motor (28) as seen in a direction of flow from said pump (26) to said hydraulic motor (28), said anticavitation valve (52) being arranged such that when said main control valve (36) assumes a condition preventing fluid communication between said pump (26) and said hydraulic motor (28), hydraulic fluid may flow from a first side (70) to a second side (74) of said hydraulic motor (28) via said anticavitation valve (52), **characterized in that** said anticavitation valve (52) comprises a variable valve assembly (81) comprising an electronically controlled pressure relief valve for variably controlling the hydraulic fluid flow from said first side (70) to said second side (74) of said hydraulic motor (28).

2. The hydraulic system (30) according to claim 1, further comprising a control unit (78) adapted to control said variable valve assembly (81).

3. The hydraulic system (30) according to claim 2, wherein said control unit (78) is adapted to control said variable valve assembly (81) by at least setting the relief pressure of said variable pressure relief valve (82, 84).

4. The hydraulic system according to any one of claims 2 or 3, wherein the control unit is adapted to receive a signal indicative of a vehicle propulsion mode for said vehicle, said control unit being adapted to set said relief pressure of said variable pressure relief valve (82, 84) based on said vehicle propulsion mode.

5. The hydraulic system (30) according to claim 4, wherein said vehicle propulsion mode is representative of a hydraulic fluid temperature parameter indicative of the temperature of the hydraulic fluid in said hydraulic system (30), the control unit (78) being adapted to control said variable valve assembly (81) on the basis of said hydraulic fluid temperature parameter.

6. The hydraulic system (30) according to any one of claims 2 to 5, wherein said control unit (78) is adapted to receive the vehicle propulsion mode from an operator input from an operator and to control said variable valve assembly (81) on the basis of said operator input.

7. The hydraulic system (30) according to any one of the preceding claims, wherein said anticavitation valve (52) comprises a flow control valve assembly (92) for controlling the flow between said main control valve (36) and said hydraulic motor (28).

8. The hydraulic system (30) according to claim 7, wherein said flow control valve assembly (92) comprises at least one proportional valve (94, 96).

9. The hydraulic system (30) according to claim 8, wherein the at least one proportional valve (94, 96) is controlled by means of said control unit, said control unit controlling said at least one proportional valve (94, 96) based on said vehicle propulsion mode.

10. A hydraulic assembly (24) comprising a pump (26), a hydraulic motor (28) and the hydraulic system (30) according to any one of the preceding claims.

11. A vehicle (10), preferably a working machine, comprising a hydraulic system (30) according to any one of claim 1 to 9 and/or a hydraulic assembly (24) according to claim 10.

12. A method for controlling a hydraulic fluid flow via a hydraulic motor (28) and an anticavitation valve (52) of a hydraulic assembly, said hydraulic assembly comprising a pump (26), a hydraulic motor (28) and a hydraulic system (30) adapted to circulate hydraulic fluid via said pump (26) and said hydraulic motor (28), said hydraulic system (30) being arranged for propelling a vehicle and comprises a main control valve (36) located between said pump (26) and said hydraulic motor (28) as seen in a direction of flow from said pump (26) to said hydraulic motor (28), said hydraulic system (30) further comprising said anticavitation valve (52) located between said main control valve (36) and said hydraulic motor (28) as seen in a direction of flow from said pump (26) to said hydraulic motor (28), said anticavitation valve (52) being arranged such that when said main control valve (36) assumes a condition so as to prevent fluid communication between said pump (26) and said hydraulic motor (28), hydraulic fluid may flow from a first side to a second side of said hydraulic motor (28) via said anticavitation valve (52), **characterized by** controlling a variable valve assembly (81) comprising an electrically controlled pressure relief valve of said anticavitation valve (52) for variably controlling hydraulic fluid flow from said first side to said second side of said hydraulic motor (28).

13. The method according to claim 12, wherein said method comprises setting the relief pressure of said variable pressure relief valve (82, 84) to thereby control hydraulic fluid flow from said first side to said second side of said hydraulic motor (28).

14. The method according to any one of claims 12 to 13, comprising receiving operator input from an operator and controlling said variable valve assembly (81) on the basis of said operator input.

15. An electronic control unit (78) for a hydraulic assembly, said hydraulic assembly comprising a pump (26), a hydraulic motor (28) and a hydraulic system (30) adapted to circulate hydraulic fluid via said pump (26) and said hydraulic motor (28), said hydraulic system (30) being arranged for propelling a vehicle and comprises a main control valve (36) located between said pump (26) and said hydraulic motor (28) as seen in a direction of flow from said pump (26) to said hydraulic motor (28), said hydraulic system (30) further comprising said anticavitation valve (52) located between said main control valve (36) and said hydraulic motor (28) as seen in a direction of flow from said pump (26) to said hydraulic motor (28), said anticavitation valve (52) being arranged such that when said main control valve (36) assumes a condition preventing fluid communication between said pump (26) and said hydraulic motor (28), hydraulic fluid may flow from a first side to a second side of said hydraulic motor (28) via said anticavitation valve (52), **characterized in that** said electronic control unit (78) is adapted to issue a signal for controlling an electrically controlled pressure relief valve of a variable valve assembly (81) of said anticavitation valve (52) for variably controlling the hydraulic fluid flow from said first side to said second side of said hydraulic motor (28).

## Patentansprüche

1. Hydrauliksystem (30) zum Zirkulieren von Hydraulikfluid über eine Pumpe (26) und einen Hydraulikmotor (28), wobei das Hydrauliksystem zum Antreiben eines Fahrzeugs angeordnet ist, wobei das Hydrauliksystem (30) ein Hauptsteuerventil (36) aufweist, angeordnet zwischen der Pumpe (26) und dem Hydraulikmotor (28), gesehen in einer Flussrichtung von der Pumpe (26) zu dem Hydraulikmotor (28), und ein Antikavitationsventil (52) aufweist, angeordnet zwischen dem Hauptsteuerventil (36) und dem Hydraulikmotor (28), gesehen in einer Flussrichtung von der Pumpe (26) zu dem Hydraulikmotor (28), wobei das Antikavitationsventil (52) derart angeordnet ist, dass dann, wenn das Hauptsteuerventil (36) einen Zustand annimmt, der eine Fluidkommunikation zwischen der Pumpe (26) und dem Hydraulikmotor (28) verhindert, Hydraulikfluid von einer ersten Seite (70) zu einer zweiten Seite (74) des Hydraulikmotors (28) über das Antikavitationsventil (52) fließen kann, **dadurch gekennzeichnet, dass** das Antikavitationsventil (52) eine variable Ventilanordnung (81) aufweist, die ein elektronisch gesteuertes Druckentlastungsventil aufweist, um den Fluss des Hydraulikfluids von der ersten Seite (70) zu der zweiten Seite (74) des Hydraulikmotors (28) variabel zu steuern.

2. Hydrauliksystem (30) nach Anspruch 1, weiterhin eine Steuereinheit (78) aufweisend, angepasst, um die variable Ventilanordnung (81) zu steuern.

3. Hydrauliksystem (30) nach Anspruch 2, wobei die Steuereinheit (78) angepasst ist, um die variable Ventilanordnung (81) zu steuern, in dem mindestens der Entlastungsdruck des variablen Druckentlastungsventils (82, 84) eingestellt wird.

4. Hydrauliksystem nach einem der Ansprüche 2 oder 3, wobei die Steuereinheit angepasst ist, um ein Signal zu empfangen, welches einen Fahrzeugantriebsmodus für das Fahrzeug anzeigt, wobei die Steuereinheit angepasst ist, um den Entlastungsdruck des variablen Druckentlastungsventils (82, 84) auf der Basis des Fahrzeugantriebsmodus einzustellen.

5. Hydrauliksystem (30) nach Anspruch 4, wobei der Fahrzeugantriebsmodus für ein Hydraulikfluidtemperaturparameter repräsentativ ist, der die Temperatur des Hydraulikfluids in dem Hydrauliksystem (30) anzeigt, wobei die Steuereinheit (78) angepasst ist, um die variable Ventilanordnung (81) auf der Basis des Hydraulikfluidtemperaturparameters zu steuern.

6. Hydrauliksystem (30) nach einem der Ansprüche 2 bis 5, wobei die Steuereinheit (78) angepasst ist, um den Fahrzeugantriebsmodus Operatoreingabe eines Operators zu empfangen, und die variable Ventilanordnung (81) auf der Basis des Operatoreingangs zu steuern.

7. Hydrauliksystem (30) nach einem der vorstehenden Ansprüche, wobei das Antikavitationsventil (52) eine Flusssteuerventilanordnung (92) zum Steuern des Flusses zwischen dem Hauptsteuerventil (36) und dem Hydraulikmotor (28) aufweist.

8. Hydrauliksystem (30) nach Anspruch 7, wobei die Flusssteuerventilanordnung (92) mindestens ein Proportionalventil (94, 96) aufweist.

9. Hydrauliksystem (30) nach Anspruch 8, wobei das mindestens eine Proportionalventil (94, 96) mittels der Steuereinheit gesteuert wird, wobei die Steuereinheit das mindestens eine Proportionalventil (94, 96) basierend auf dem Fahrzeugantriebsmodus steuert.

10. Hydraulikanordnung (24), aufweisend: eine Pumpe (26), einen Hydraulikmotor (28) und das Hydrauliksystem (30) nach einem der vorstehenden Ansprüche.

11. Fahrzeug (10), bevorzugt eine Arbeitsmaschine, aufweisend ein Hydrauliksystem (30) nach einem der Ansprüche 1 bis 9 und/oder eine Hydraulikanordnung (24) nach Anspruch 10.

12. Verfahren zum Steuern eines Flusses eines Hydraulikfluids über einen Hydraulikmotor (28) und ein Antikavitationsventil (52) einer Hydraulikanordnung, wobei die Hydraulikanordnung eine Pumpe (26), einen Hydraulikmotor (28) und ein Hydrauliksystem (30) aufweist, angepasst, um das Hydraulikfluid über die Pumpe (26) und den Hydraulikmotor (28) zu zirkulieren, wobei das Hydrauliksystem (30) angeordnet ist, um ein Fahrzeug anzutreiben und ein Hauptsteuerventil (36) aufweist, angeordnet zwischen der Pumpe (26) und dem Hydraulikmotor (28), gesehen in einer Flussrichtung von der Pumpe (26) zu dem Hydraulikmotor (28), wobei das Hydrauliksystem (30) weiterhin aufweist das Antikavitationsventil (52), angeordnet zwischen dem Hauptsteuerventil (36) und dem Hydraulikmotor (28), gesehen in einer Flussrichtung von der Pumpe (26) zu dem Hydraulikmotor (28), wobei das Antikavitationsventil (52) derart angeordnet ist, dass dann, wenn das Hauptsteuerventil (36) einen Zustand annimmt, um die Fluidkommunikation zwischen der Pumpe (26) und dem Hydraulikmotor (28) zu unterbinden, Hydraulikfluid von einer ersten Seite zu einer zweiten Seite des Hydraulikmotors (28) über das Antikavitationsventil (52) fließen kann, **gekennzeichnet durch** Steuern einer variablen Ventilanordnung (81), die ein elektronisch gesteuertes Druckentlastungsventil des Antikavitationsventils (52) aufweist, um einen hydraulischen Fluidfluss von der ersten Seite zu der zweiten Seite des Hydraulikmotors (28) variabel zu steuern.

13. Verfahren nach Anspruch 12, wobei das Verfahren aufweist: Einstellen des Entlastungsdrucks des variablen Druckentlastungsventils (82, 84), um somit einen Fluss eines Hydraulikfluids von der ersten Seite zu der zweiten Seite des Hydraulikmotors (28) zu steuern.

14. Verfahren nach einem der Ansprüche 12 bis 13, aufweisend: Empfangen einer Operatoreingabe eines Operators, und Steuern der variablen Ventilanordnung (81) auf der Basis der Operatoreingabe.

15. Elektronische Steuereinheit (78) für eine Hydraulikanordnung, wobei die Hydraulikanordnung eine Pumpe (26), einen Hydraulikmotor (28) und ein Hydrauliksystem (30) aufweist, angepasst, um ein Hydraulikfluid über die Pumpe (26) und den Hydraulikmotor (28) zu zirkulieren, wobei das Hydrauliksystem (30) angeordnet ist, um ein Fahrzeug anzutreiben und ein Hauptsteuerventil (36) aufweist, angeordnet zwischen der Pumpe (26) und dem Hydraulikmotor (28), gesehen in einer Flussrichtung von der Pumpe (26) zu dem Hydraulikmotor (28), wobei das Hydrauliksystem (30) weiterhin aufweist das Antikavitationsventil (52), angeordnet zwischen dem Hauptsteuerventil (36) und dem Hydraulikmotor (28), gesehen in einer Flussrichtung von der Pumpe (26) zu dem Hydraulikmotor (28), wobei das Antikavitationsventil (52) derart angeordnet ist, dass dann, wenn das Hauptsteuerventil (36) einen Zustand annimmt, der eine Fluidkommunikation zwischen der Pumpe (26) und dem Hydraulikmotor (28) verhindert, Hydraulikfluid von einer ersten Seite zu einer zweiten Seite des Hydraulikmotors (28) über das Antikavitationsventil (52) fließen kann, **dadurch gekennzeichnet, dass** die elektronische Steuereinheit (78) angepasst ist, um ein Signal zum Steuern eines elektrisch kontrollierten Druckentlastungsventils einer variablen Ventilanordnung (81) des Antikavitationsventils (52) herauszugeben, um den hydraulischen Fluidfluss von der ersten Seite zu der zweiten Seite des Hydraulikmotors (28) zu steuern.

## Revendications

1. Système hydraulique (30) pour faire circuler un fluide hydraulique via une pompe (26) et un moteur hydraulique (28), ledit système hydraulique étant agencé pour propulser un véhicule, où ledit système hydraulique (30) comprend une soupape de commande principale (36) située entre ladite pompe (26) et ledit moteur hydraulique (28), telle qu'observée dans une direction d'écoulement depuis ladite pompe (26) audit moteur hydraulique (28), et une soupape anti-cavitation (52) située entre ladite soupape de commande principale (36) et ledit moteur hydraulique (28) telle qu'observée dans une direction d'écoulement depuis ladite pompe (26) audit moteur hydraulique (28), ladite soupape anti-cavitation (52) étant agencée de sorte que, lorsque ladite soupape de commande principale (36) adopte une condition empêchant une communication fluidique entre ladite pompe (26) et ledit moteur hydraulique (28), le fluide hydraulique peut s'écouler d'un premier côté (70) à un deuxième côté (74) dudit moteur hydraulique (28) via ladite soupape anti-cavitation (52),
**caractérisé en ce que** ladite soupape anti-cavitation (52) comprend un ensemble de soupape variable (81) comprenant une soupape de décharge à commande électronique pour commander de manière variable le fluide hydraulique s'écoulant dudit premier côté (70) audit deuxième côté (74) dudit moteur hydraulique (28).

2. Système hydraulique (30) selon la revendication 1, comprenant en outre une unité de commande (78) adaptée pour commander ledit ensemble de soupape variable (81).

3. Système hydraulique (30) selon la revendication 2, dans lequel ladite unité de commande (78) est adaptée pour commander ledit ensemble de soupape variable (81) au moins en réglant la pression de décharge de ladite soupape de décharge variable (82, 84).

4. Système hydraulique selon l'une quelconque des revendications 2 et 3, dans lequel l'unité de commande est adaptée pour recevoir un signal indiquant un mode de propulsion de véhicule pour ledit véhicule, ladite unité de commande étant adaptée pour régler ladite pression de décharge de ladite soupape de décharge variable (82, 84) sur la base dudit mode de propulsion de véhicule.

5. Système hydraulique (30) selon la revendication 4, dans lequel ledit mode de propulsion de véhicule représente un paramètre de température de fluide hydraulique indiquant la température du fluide hydraulique dans ledit système hydraulique (30), l'unité de commande (78) étant adaptée pour commander ledit ensemble de soupape variable (81) sur la base dudit paramètre de température de fluide hydraulique.

6. Système hydraulique (30) selon l'une quelconque des revendications 2 à 5, dans lequel ladite unité de commande (78) est adaptée pour recevoir le mode de propulsion de véhicule à partir d'une entrée d'utilisateur provenant d'un utilisateur et pour commander ledit ensemble de soupape variable (81) sur la base de ladite entrée d'utilisateur.

7. Système hydraulique (30) selon l'une quelconque des revendications précédentes, dans lequel ladite soupape anti-cavitation (52) comprend un ensemble de soupape de commande d'écoulement (92) destiné à commander l'écoulement entre ladite soupape de commande principale (36) et ledit moteur hydraulique (28).

8. Système hydraulique (30) selon la revendication 7, dans lequel ledit ensemble de soupape de commande d'écoulement (92) comprend au moins une soupape proportionnelle (94, 96).

9. Système hydraulique (30) selon la revendication 8, dans lequel l'au moins une soupape proportionnelle (94, 96) est commandée au moyen de ladite unité de commande, ladite unité de commande commandant ladite au moins une soupape proportionnelle (94, 96) sur la base dudit mode de propulsion de véhicule.

10. Ensemble hydraulique (24) comprenant une pompe (26), un moteur hydraulique (28) et le système hydraulique (30) selon l'une quelconque des revendications précédentes.

11. Véhicule (10), de préférence une machine de travail, comprenant un système hydraulique (30) selon l'une quelconque des revendications 1 à 9 et/ou ensemble hydraulique (24) selon la revendication 10.

12. Procédé de commande d'un écoulement de fluide hydraulique via un moteur hydraulique (28) et une soupape anti-cavitation (52) d'un ensemble hydraulique, ledit ensemble hydraulique comprenant une pompe (26), un moteur hydraulique (28) et un système hydraulique (30) adapté pour faire circuler un fluide hydraulique via ladite pompe (26) et ledit moteur hydraulique (28), ledit système hydraulique (30) étant agencé pour propulser un véhicule et comprend une soupape de commande principale (36) située entre ladite pompe (26) et ledit moteur hydraulique (28), telle qu'observée dans une direction d'écoulement depuis ladite pompe (26) audit moteur hydraulique (28), ledit système hydraulique (30) comprenant en outre ladite soupape anti-cavitation (52) située entre ladite soupape de commande principale (36) et ledit moteur hydraulique (28), telle qu'observée dans une direction d'écoulement depuis ladite pompe (26) audit moteur hydraulique (28), ladite soupape anti-cavitation (52) étant agencée de sorte que, lorsque ladite soupape de commande principale (36) adopte une condition empêchant une communication fluidique entre ladite pompe (26) et ledit moteur hydraulique (28), un fluide hydraulique peut s'écouler d'un premier côté à un deuxième côté dudit moteur hydraulique (28) via ladite soupape anti-cavitation (52), **caractérisé par** le fait de commander un ensemble de soupape variable (81) comprenant une soupape de décharge à commande électrique de ladite soupape anti-cavitation (52) pour commander de manière variable l'écoulement de fluide hydraulique dudit premier côté audit deuxième côté dudit moteur hydraulique (28).

13. Procédé selon la revendication 12, dans lequel ledit procédé comprend le réglage de la pression de décharge de ladite soupape de décharge variable (82, 84) pour commander ainsi l'écoulement de fluide hydraulique dudit premier côté audit deuxième côté dudit moteur hydraulique (28).

14. Procédé selon l'une quelconque des revendications 12 et 13, comprenant la réception d'une entrée d'utilisateur provenant d'un utilisateur et la commande dudit ensemble de soupape variable (81) sur la base de ladite entrée d'utilisateur.

15. Unité de commande électronique (78) pour un ensemble hydraulique, ledit ensemble hydraulique comprenant une pompe (26), un moteur hydraulique (28) et un système hydraulique (30) adapté pour faire circuler un fluide hydraulique via ladite pompe (26) et ledit moteur hydraulique (28), ledit système hydraulique (30) étant agencé pour propulser un véhicule et comprend une soupape de commande principale (36) située entre ladite pompe (26) et ledit moteur hydraulique (28), telle qu'observée dans la direction d'écoulement depuis ladite pompe (26) audit moteur hydraulique (28), ledit système hydraulique (30) comprenant en outre ladite soupape anti-cavitation (52) située entre ladite soupape de commande principale (36) et ledit moteur hydraulique (28), telle qu'observée dans une direction d'écoulement depuis ladite pompe (26) audit moteur hydraulique (28), ladite soupape anti-cavitation (52) étant agencée de sorte que, lorsque ladite soupape de commande principale (36) adopte une condition empêchant une communication fluidique entre ladite pompe (26) et ledit moteur hydraulique (28), le fluide puisse s'écouler d'un premier côté à un deuxième côté dudit moteur hydraulique (28) via ladite soupape anti-cavitation (52), **caractérisé en ce que** ladite unité de commande électronique (78) est adaptée pour émettre un signal pour commander une soupape de décharge à commande électrique d'un ensemble de soupape variable (81) de ladite soupape anti-cavitation (52) afin de commander de manière variable l'écoulement de fluide hydraulique dudit premier côté audit deuxième côté dudit moteur hydraulique (28).
